# EUROPEAN PATENT SPECIFICATION

(11) **EP 3 029 319 B1**
(45) Date of publication and mention of the grant of the patent: **12.04.2017**
(21) Application number: 14196646.5
(22) Date of filing: 05.12.2014
(51) Int. Cl.: F03G 7/06, B60L 8/00

(54) **Temperature-driven mechanical system**
Temperaturbetriebenes mechanisches System
Système mécanique réglé par température

(43) Date of publication of application: 08.06.2016
(73) Proprietor: Thermatorque, Inc., Afton, VA 22920 (US)
(72) Inventor: MAKEL, David Drake, Nellysford, VA 22958 (US)
(74) Representative: Gill Jennings & Every LLP

(56) References cited:
- US-A- 3 940 935
- US-A- 4 075 847
- US-A1- 2014 223 905
- US-B1- 6 647 725

## Description

### Technical Field

The present invention relates to systems employing temperature-induced shape-changing materials, such as bi-metallic strips and shape-memory alloys, to perform a mechanical function, more particularly to such systems configured to operate a mechanism such as a shutter.

### Background Art

It is known in the prior art to use bi-metallic strips and shape-memory alloys in a range of mechanical applications. For example, patent application with publication number US 2003/0226359 discloses a heat-driven motor employing nitinol. US 6 647 725 A discloses a system according to the preamble of claim 1.

### Summary of the Embodiments

In a first embodiment of the invention there is provided a temperature-driven mechanical system. This embodiment includes a first effector, made of temperature-induced shape-changing material, having first and second ends and a longitudinal axis running through at least one of the ends, as well as a suspension system that mounts an assembly including the effector, to support rotation of the assembly about the longitudinal axis. The suspension system has first and second rotation limit stops to limit rotation of the assembly to less than 180 degrees about the longitudinal axis, wherein the first limit stop is associated with a first angular position of the assembly at or below a first temperature limit and the second limit stop is associated with a second angular position of the assembly at or above a second temperature limit. Furthermore, the suspension is configured so that at the first temperature limit the first effector assumes a first shape that causes the center of gravity of the assembly to be located on a first side of a vertical plane passing through the longitudinal axis and at the second temperature limit the first effector assumes a second shape that causes the center of gravity of the assembly to be located on a second side of the vertical plane.

In a further embodiment, (i) the assembly includes a second effector having first and second ends and the longitudinal axis also runs through at least one of the first and second ends of the second effector and (ii) the second effector is disposed in the assembly so that the effectors in the assembly exhibit bilateral symmetry.

Alternatively or in addition, the system further includes a shutter element mounted in the assembly.

In a further embodiment, the system further includes a counterweight mounted in the assembly configured to cause the assembly to have a center of gravity located in the vertical plane passing through the longitudinal axis at a transition temperature between the first temperature limit and the second temperature limit.

Optionally, the shutter element is implemented as rectangular parallelepiped having a major axis that is parallel to the axis of rotation, and two adjacent faces of the parallelepiped display distinct messages, so that temperature of the effectors determines which of the distinct messages is visible to a viewer.

In a further related embodiment, there is provided an array of systems as described in any of the foregoing embodiments. The array is configured so that the longitudinal axes of the systems in the array are substantially parallel to one another. Optionally, the array is configured so that the longitudinal axes of the systems are substantially co-planar.

In a further related embodiment, a plurality of assemblies of the systems in the array are coupled to one another so that they rotate in unison. In a further related embodiment, the array further includes a temperature limit adjustment mechanism configured to provide a torque to the assemblies with respect to their axes of rotation so as to shift the temperature limits at which centers of gravity of the assemblies in the array generate torque sufficient to cause rotation of the assemblies. Optionally, the temperature limit adjustment mechanism includes a spring with an adjustable amount of force. Alternatively, the temperature limit adjustment mechanism includes a weight with an adjustable lever arm.

In a further related embodiment, the array further includes a manual override assembly configured to cause the shutters to move into and be retained in a state determined by manual operation.

In another related embodiment, each of the shutter elements is implemented as a rectangular parallelepiped having a major axis that is parallel to the axis of rotation, and two adjacent faces of the parallelepiped display distinct messages, so that temperature of the effectors determines which of the distinct messages is visible to a viewer.

In another related embodiment of the system, the shutter is reflective.

In another related embodiment of the system, the shutter is light-filtering in that it is configured to selectively pass primarily light falling within a selected frequency range.

In another related embodiment of the system, the shutter is configured to regulate air flow.

In another related embodiment of the system, the first and second rotation limit stops have separately adjustable angular positions, about the longitudinal axis, relative to the vertical plane.

Similarly, in another related embodiment of the array of systems, the first and second rotation limit stops have separately adjustable angular positions, about the longitudinal axis, relative to the vertical plane. In a further related embodiment, the plurality of assemblies are coupled to one another via an interconnect member that is coupled to each shutter of the array. The interconnect member travels in first and second directions transverse to the axes of rotation of the assemblies, and the directions depend on the direction of rotation of shutters in the array with change in temperature. In this embodiment, the array further comprises adjustable first and second translation limit stops on travel of the interconnect in the first and second directions.

### Brief Description of the Drawings

The foregoing features of embodiments will be more readily understood by reference to the following detailed description, taken with reference to the accompanying drawings, in which:
Figs. 1a - 1f show the effects of temperature on shape of a simplified actuator in accordance with a simplified embodiment of the present invention;
Figs. 2 - 7 show the effects of temperature on the simplified actuator of Figs. 1a - 1f when the actuator is mounted on a simplified suspension system, and the temperature shifts from an initial temperature T1, to an intermediate temperature T2, to an elevated temperature T3, and then returns to the intermediate temperature T2, and finally back to the initial temperature T1;
In Fig. 2a, the actuator is shown in a perspective view in the suspension system in the left-hand position, at initial temperature T1, wherein the actuator is curved in a first direction;
Fig. 2b is an end view of the actuator of Fig. 2a, in which the position of its center gravity is shown relative to the suspension system and in particular relative to the axis of rotation;
Fig. 2c is a top view of the actuator of Fig. 2a, showing the manner in which the actuator is bent relative to its axis of rotation;
Figs. 3a - 3c similarly present a perspective view, an end view, and a top view of the actuator of Figs. 1a - 1f at temperature T2, which is above temperature T1 and at which the actuator is straight, with the actuator still in the left-hand position;
Figs. 4a - 4c present a perspective view, an end view, and a top view of the actuator of Figs. 1a - 1f at temperature T3, which is above temperature T2 and at which the actuator is now curved in a second direction, with the actuator still in the left-hand position, but wherein the center of gravity of the actuator has shifted to the right hand side of the axis of rotation;
Figs. 5a - 5c present a perspective view, an end view, and a top view of the actuator of Figs. 1a - 1 f, still at temperature T3, wherein the actuator has now flopped to the right-hand position as a result of the shifted position of its center of gravity shown in Figs. 4a - 4c;
Figs. 6a - 7c present a perspective view, an end view, and a top view of the actuator of Figs. 1a - 1 f, now returned to temperature T2, wherein the actuator has again assumed a straight shape, and remains in the right-hand position;
Figs. 7a - 7c present a perspective view, an end view, and a to view of the actuator of Figs. 1a - 1 f, at the initial temperature T1, wherein the actuator has returned to the shape curved in the first direction, and wherein the center of gravity of the actuator has shifted back to the left hand side of the axis of rotation.
Fig. 8a provides detail of the actuator of Figs. 1a - 1 f; Fig. 8b shows how such an actuator may mount an object to be driven by the actuator; and Fig. 8c shows how the actuator of Fig. 8b may be considered as a pair of actuators each mounting a hub;
Fig. 9 shows an exploded view of a shutter element assembly in accordance with an embodiment of the present invention;
Fig. 10 shows the shutter element assembly of Fig. 9 after being assembled;
Fig. 11 a shows a perspective view of the shutter element assembly of Fig. 10 in a suspension system at initial temperature T1, in accordance with a further embodiment of the present invention, wherein the actuators are curved in a first direction and the assembly lies in the left-hand position;

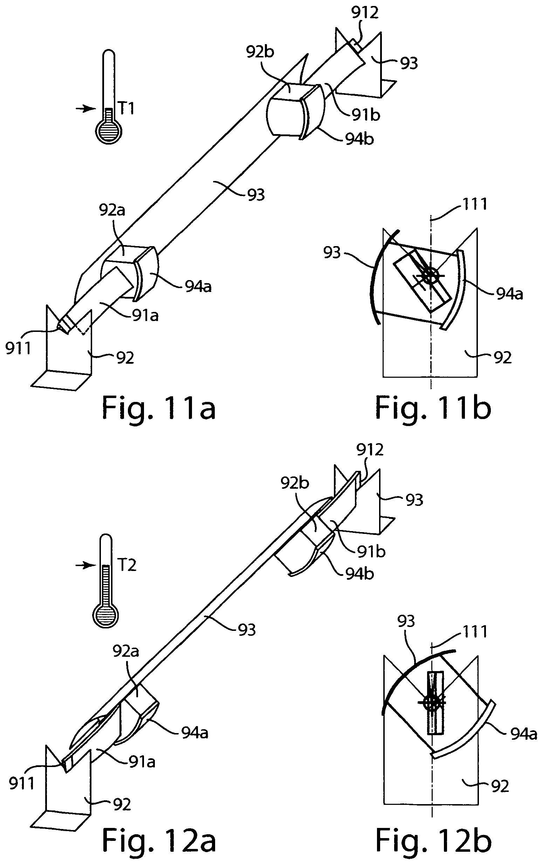

Fig. 11 b shows an end view of the embodiment of Fig. 11 a;

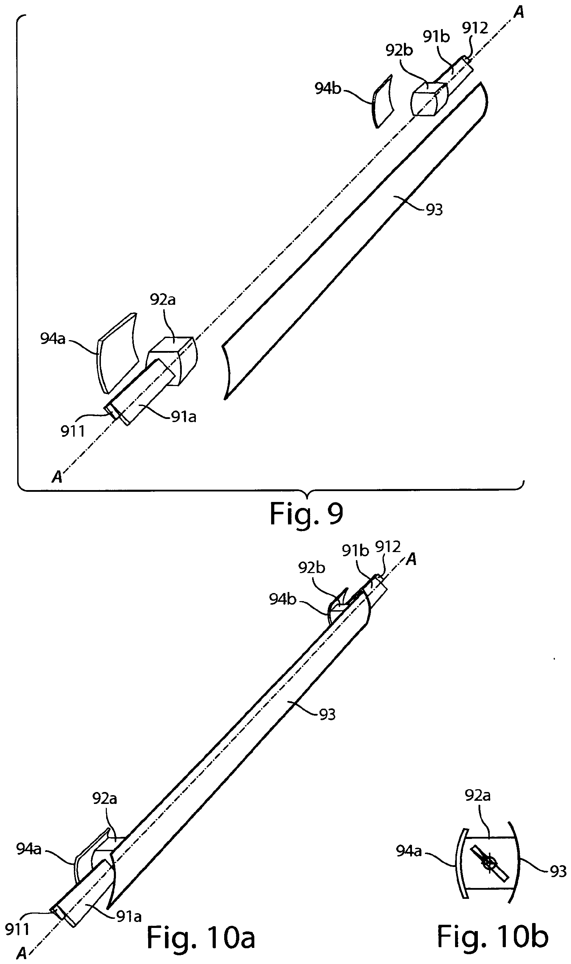

Fig. 12a shows a perspective view of the embodiment of Fig 10 in the suspension system of Fig. 11, but now at an intermediate temperature slightly above the transition temperature T2, at which the actuators previously assumed a straight shape, so that now a resulting torque has moved the assembly to a center position;
Fig. 12b is an end view of the embodiment of Fig. 12a;

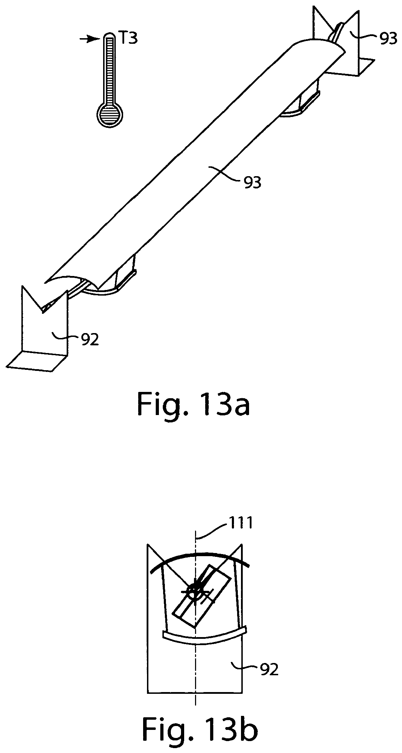

Fig. 13a shows a perspective view of the embodiment of Fig. 10 in the suspension system of Fig. 11, but now at the elevated temperature T3, wherein the actuators are now curved in the second direction and the assembly lies in the right-hand position;
Fig. 13b is an end view of the embodiment of Fig. 13a;

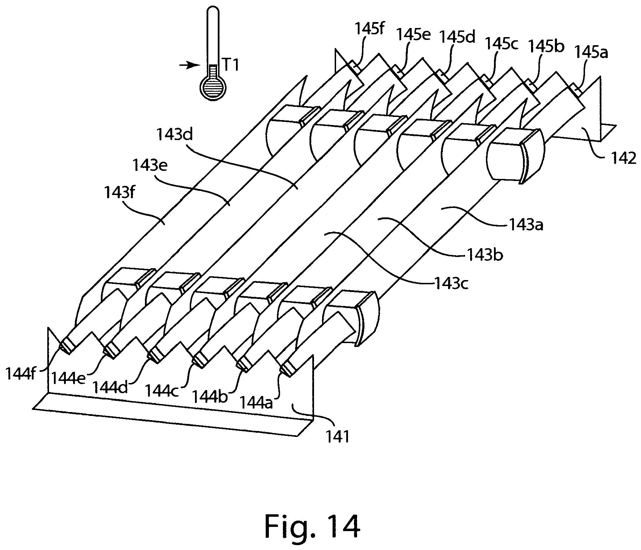

Fig. 14 shows an array of shutter element assemblies in a suspension system at initial temperature T1;

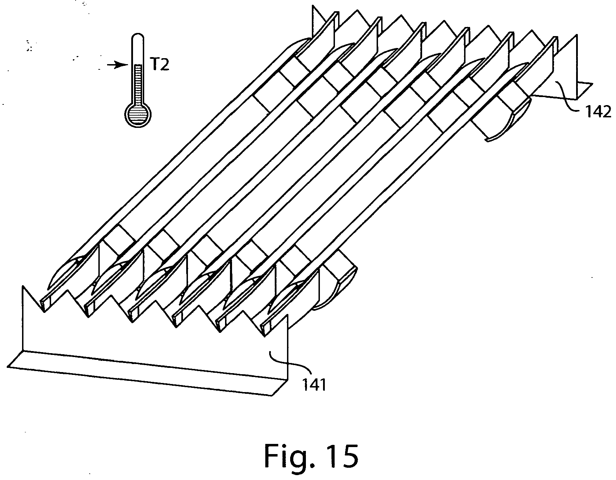

Fig. 15 shows the array of shutter element assemblies of Fig. 14 at an intermediate slightly above the transition temperature T2 at which the actuators previously assumed a straight shape, so that now a resulting torque has moved the assembly to a center position;

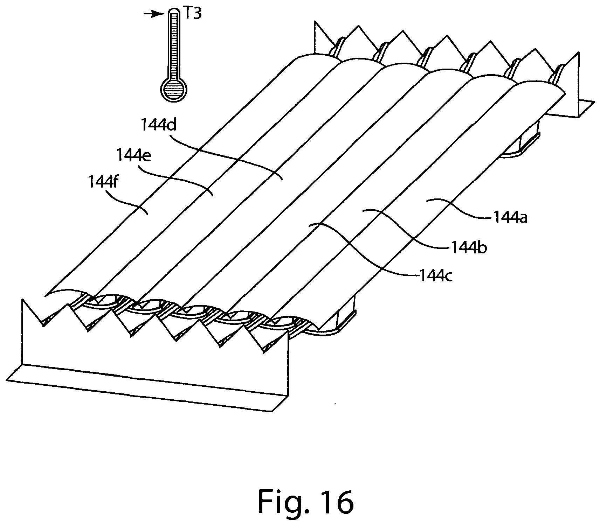

Fig. 16 shows the array of shutter element assemblies of Fig. 14 at elevated temperature T3;

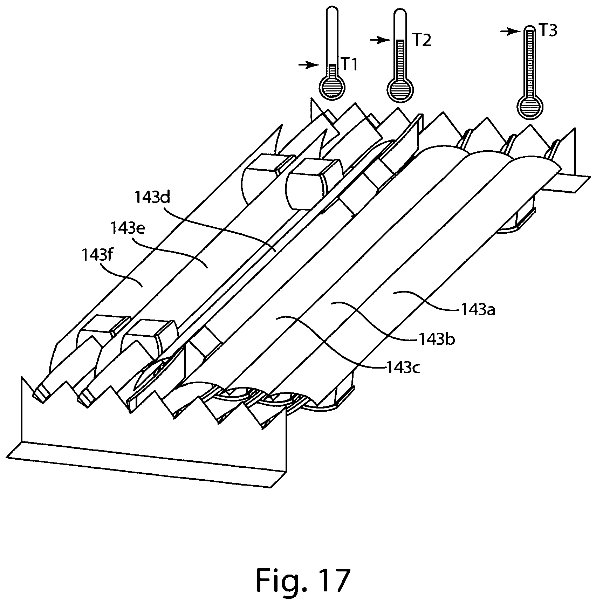

Fig. 17 shows an array of shutter element assemblies, similar to the array of Fig. 14, wherein the operating characteristics of actuators in the array have been adjusted so that, at a given temperature, a first group of actuators causes their corresponding shutter elements to be in the open position; a second group of actuators causes their corresponding shutter elements to be in an intermediate position, and a third group of actuators causes their corresponding shutter elements to be in the closed position;

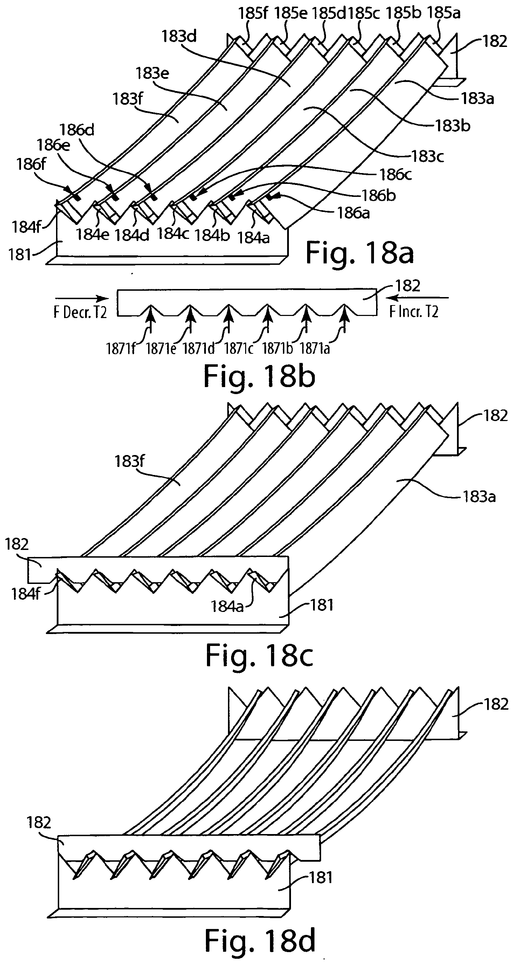

Figs. 18a - 18d illustrate an array of shutter element assemblies, in which each shutter element assembly is implemented as a single actuator, and wherein the assemblies are coupled together by an interconnect member;

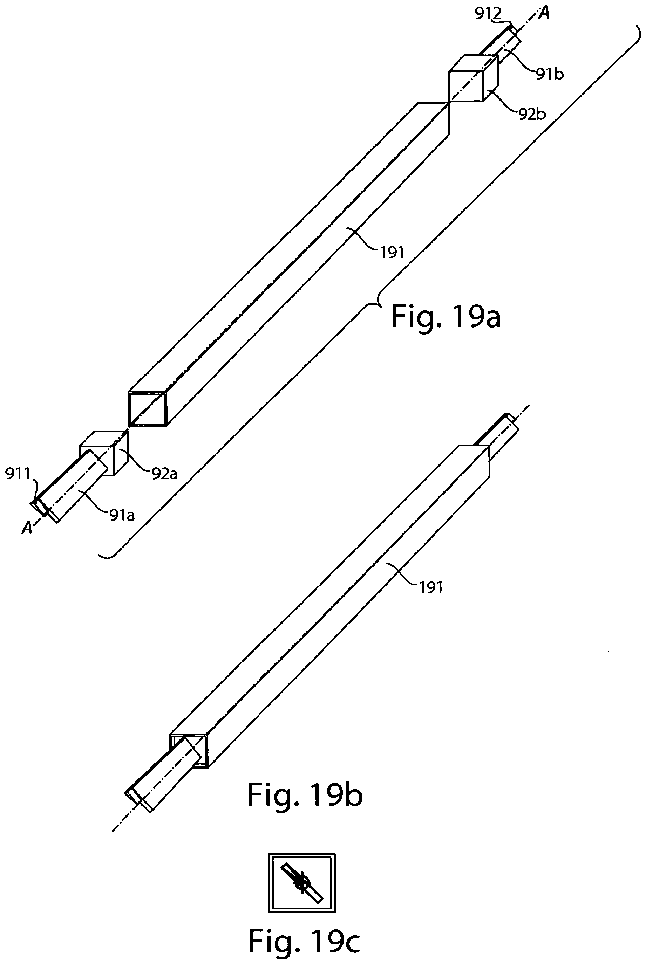

Figs. 19a - 19c illustrate a shutter element assembly wherein the shutter element is a rectangular parallelepiped; and

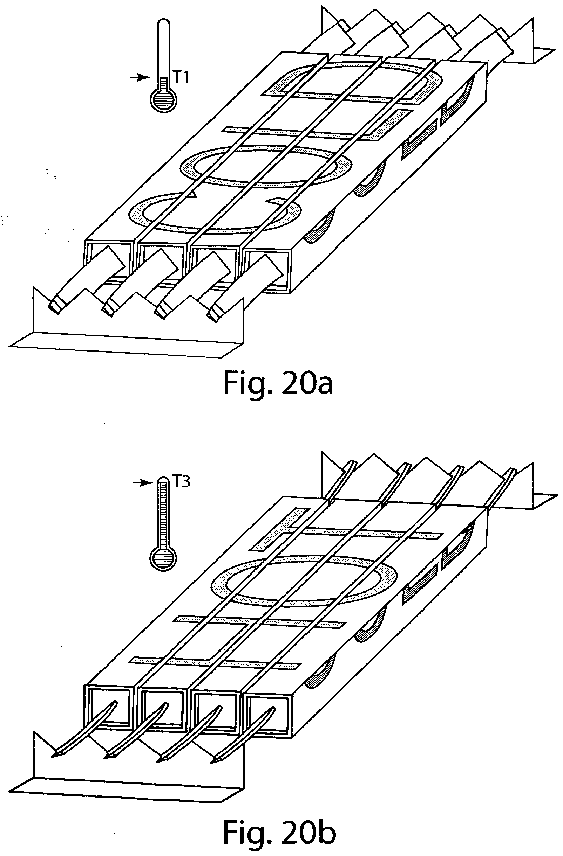

Figs. 20a and 20b show an array of shutter element assemblies using rectangular parallelepipeds according to Figs. 19a - 19c.

### Detailed Description of Specific Embodiments

Definitions. As used in this description and the accompanying claims, the following terms shall have the meanings indicated, unless the context otherwise requires:

The term "temperature-induced shape-changing material" means a material that changes shape in response to a change in temperature of the material. Temperature-induced shape-changing materials include strips or other shapes including a plurality of layers of materials having differing coefficients of expansion, such as bi-metallic strips, and shape-memory alloys and other shape-memory materials, such as nitinol.

The term "shutter element" means a member presenting a surface configured to filter or reflect incident electromagnetic radiation, such member being mountable in an assembly that includes an effector made of temperature-induced shape-changing material having first and second ends, the assembly being rotatable about a longitudinal axis running through at least one of the ends of the effector.

Included where pertinent in the figures is a rendition of a simple thermometer to indicate relative temperature for the particular figure. Three relative temperatures are indicated. T2 is the transition temperature at which an effector made of temperature-induced shape-changing material is essentially straight. In a completely idealized, balanced and rigid system this is the temperature at which a rotating assembly in which the effector is mounted is completely balanced and, essentially, metastable. In various embodiments herein, a change in temperature of the effector causes a change in the direction of its curvature (to the left or to the right, for example) resulting in a net torque in the appropriate direction caused by a corresponding movement of the center of gravity of the assembly to one side or other of its axis of rotation. T1 is a low temperature (relative to T2) at which the effector is curved in a first direction. T3 is a high temperature (relative to T2) at which the bar is curved in a second direction.

The skewed (45 deg) cross represents the approximate location of the center of gravity (CG) of the rotating assembly. The small horizontal/vertical cross with a small circle depicts the axis of rotation (AR) of the assembly.

To reduce the number of lines and relative complexity of the figures the items have been depicted as if only the end supports are transparent. This is a compromise from a traditional mechanical drawing, but by reducing the complexity it makes the figures, it is believed, easier to comprehend.

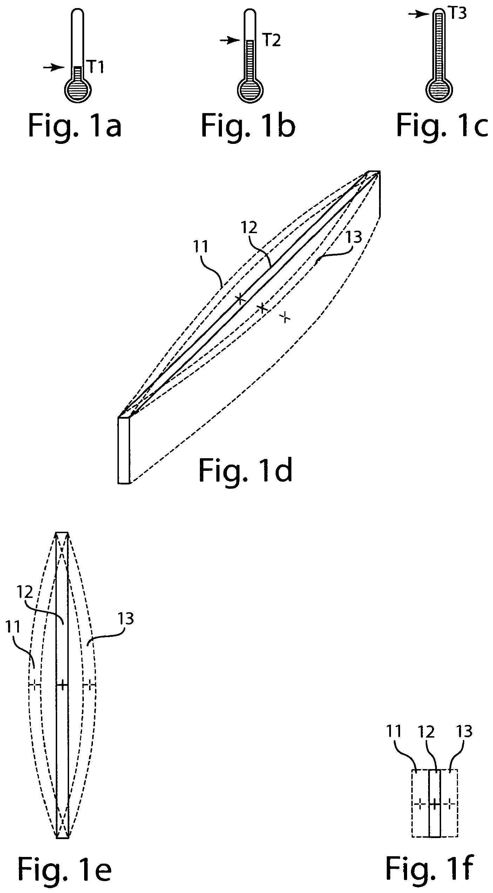

Figs. 1a - 1f show the effects of temperature on shape of a simplified actuator in accordance with a simplified embodiment of the present invention. Figs. 1 a, 1 b, and 1 c represent temperatures respectively at T1, T2, and T3 as described above. As previously discussed, Fig. 1 d is a perspective view showing positions of the effector, which is made of temperature-induced shape-changing material, at each of these temperatures. In position 12, the effector is at temperature T2, and is straight. In position 11, the effector is at temperature T1 and is curved in a first direction. In position 13, the effector is at temperature T3 and is curved in a second direction. In Fig. 1 e, the same positions 11, 12, and 13 are shown from a top view, whereas in Fig. 1f the same positions are shown in an end view. In each of Figs. 1d, 1 e, and 1f the center of gravity of the effector is shown for each of the temperatures by the "+" or "X" symbol. Of course, as the effector bends as a function of temperature its center of gravity migrates as indicated by the successive locations of the"+" or "X" symbols.

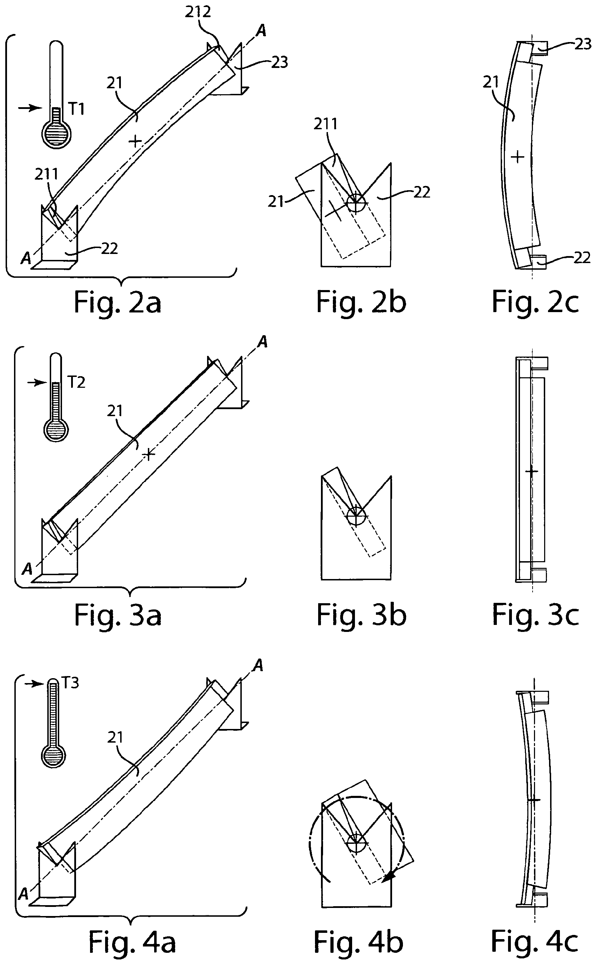

Figs. 2 - 7 show the effects of temperature on the simplified actuator of Figs. 1a - 1f when the actuator is mounted on a simplified suspension system, and the temperature shifts from an initial temperature T1, to an intermediate temperature T2, to an elevated temperature T3, and then returns to the intermediate temperature T2, and finally back to the initial temperature T1.

In Fig. 2a, the actuator is identified as item 21 and is shown in a perspective view in the suspension system in the left-hand position, at initial temperature T1. The actuator 21 includes end pieces 211 and 212 that present sharp edges to the suspension system mounts 22 and 23 respectively, so that the actuator can rotate about the longitudinal axis AA. Each system mounts 22 and 23 includes a V-notch, a side of which is encountered by the end piece 211 and 212 respectively to limit rotational motion of the effector in a given direction. The curvature of the effector 21 in the first direction at temperature T1 causes the actuator to be at rest in the left-hand position in the suspension system.

Fig. 2b is an end view of the actuator of Fig. 2a. Fig. 2c is a top view of the actuator of Fig. 2a. In each of Figs. 2a, 2b, and 2c the position of the center gravity is shown relative to the suspension system and in particular relative to the axis of rotation by the "+" or "X" symbol. It can be seen that the center of gravity lies to the left of the axis of rotation of the actuator. As a result, gravity has the effect of applying a torque to maintain the actuator against the left side of the V-notch of mount 22.

Figs. 3a - 3c similarly present a perspective view, an end view, and a top view of the actuator of Figs. 1a - 1f at temperature T2, which is above temperature T1 and at which the actuator is straight, with the actuator still in the left-hand position. It can be seen at this point that the center of gravity of the actuator lies along the axis of rotation AA. As a result, gravity has the effect of applying no torque to the actuator, which remains at rest against the left side of the V-notch of mount 22.

Figs. 4a - 4c present a perspective view, an end view, and a top view of the actuator of Figs. 1a - 1f at temperature T3, which is above temperature T2 and at which the actuator is now curved in a second direction, with the actuator still in the left-hand position, but wherein the center of gravity of the actuator has shifted to the right-hand side of the axis of rotation. At some point the migration of the center of gravity to the right-hand side of the axis of rotation will be sufficiently great to cause gravity to apply torque in an amount sufficient to cause rotation of the actuator 21 about the axis of rotation AA.

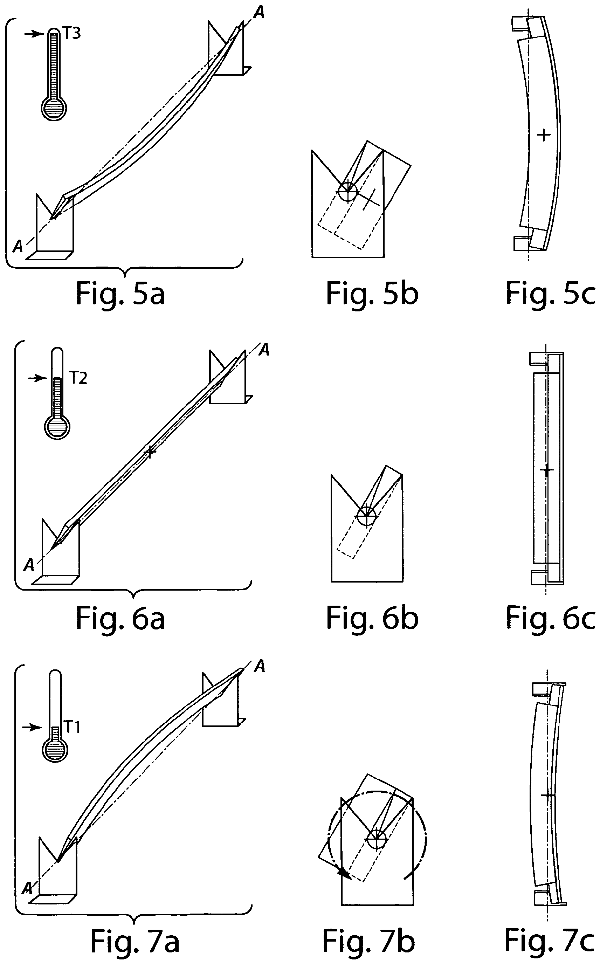

Figs. 5a - 5c present a perspective view, an end view, and a top view of the actuator of Figs. 1a - 1 f, still at temperature T3, wherein the actuator has now flopped to the right-hand position as a result of the shifted position of its center of gravity shown in Figs. 4a - 4c.

Figs. 6a - 6c present a perspective view, an end view, and a top view of the actuator of Figs. 1a - 1 f now returned to temperature T2, wherein the actuator has again assumed a straight shape, and remains in the right-hand position. Again, as in Fig. 3, the center of gravity of the actuator lies along the axis of rotation, so gravity applies no net torque to the actuator, which remains at rest in the right-hand position.

Figs. 7a - 7c present a perspective view, an end view, and a top view of the actuator of Figs. 1a - 1 f, at the initial temperature T1, wherein the actuator has returned to the shape curved in the first direction, and wherein the center of gravity of the actuator has shifted back to the left hand side of the axis of rotation. This shifted center of gravity again causes the application of torque, this time to cause rotation in the counterclockwise direction, so as to cause the actuator 21 to flop back again to the left-hand position in the mount 22, as indicated in Fig. 2.

Figs. 2-7 therefore show a cycle in which a temperature swing can cause the effector to move from one side of the V-notch to the other in mount 22.

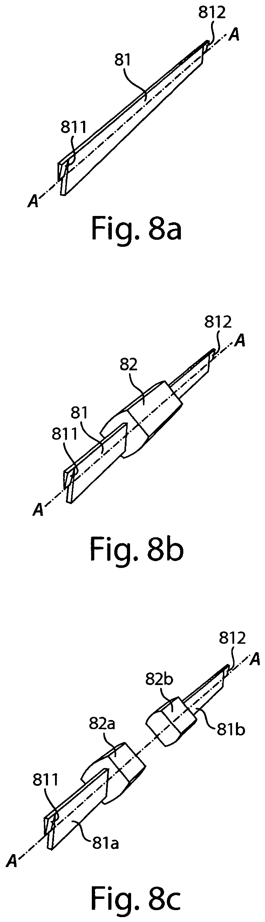

Fig. 8a provides detail of the actuator of Figs. 1a - 1 f; the actuator, identified as item 81, includes an axis of rotation AA defined by sharp edges of the end pieces 811 and 812. Fig. 8b shows how such an actuator may mount an object 82 to be driven by the actuator. Fig. 8c shows how the actuator of Fig. 8b may be sliced in half at its midpoint so as to be considered as a pair of actuators 81 a and 81 b, each mounting a hub 82a and 82b respectively and having a common axis of rotation AA.

Fig. 9 shows how a structural arrangement similar to that shown in Fig. 8c can result in a shutter element assembly driven by a pair of actuators made of temperature-induced shape-changing material. In particular, Fig.9 is an exploded view of a shutter element assembly in accordance with an embodiment of the present invention. It includes symmetrically disposed actuators 91 a and 91 b, which include end pieces 911 and 912 for mounting the assembly in a V-mount similar to that illustrated in Figs. 2-7. The hubs 92a and 92b, coupled to the effectors 91 a and 91 b respectively, are used to mount the shutter element 93. Counterweights 94a and 94b are configured so that the entire assembly experiences a net torque of zero about axis AA when the effectors 91 a and 91 b are at the transition temperature T2 and are therefore straight. Fig. 10a is a perspective view of the shutter element assembly of Fig. 9 after being assembled. Fig. 10b is an end view of the shutter element assembly of Fig. 9; this view shows that the center of gravity of the entire assembly lies on the horizontal axis when the effectors are straight, so that the assembly experiences no net torque at the transition temperature T2.

Fig. 11 a shows a perspective view of the shutter element assembly of Fig. 10 in a suspension system at initial temperature T1, in accordance with a further embodiment of the present invention, wherein the actuators are curved in a first direction and the assembly lies in the left-hand position on mount 92. This figure is generally analogous to Fig. 2. Thus the end pieces 911 and 912 lie against corresponding sides of the V-notch in mounts 92 and 93 respectively. Fig. 11 b shows an end view of the embodiment of Fig. 11a, and it can be seen that the center of gravity of the assembly lies to the left of the axis of rotation of the assembly and more particularly to the left of vertical plane 111 passing through the axis of rotation.

Fig. 12a shows a perspective view of the embodiment of Fig 10 in the suspension system of Fig. 11, but now at an intermediate temperature slightly above the transition temperature T2, at which the actuators previously assumed a straight shape, so that now the actuators have started to curve in the second direction and a resulting torque has moved the assembly to a center position in the V-notches of mounts 92 and 93. Fig. 12b is an end view of the embodiment of Fig. 12a. Fig. 13a shows a perspective view of the embodiment of Fig. 10 in the suspension system of Fig. 11, but now at the elevated temperature T3, wherein the actuators are now curved in the second direction and the assembly lies in the right-hand position. As shown in figure 13a, the shutter element 93 is approximately horizontal, corresponding to being in a closed position, whereas in Fig. 11 b, the shutter is at approximately 90° to horizontal and therefore in an open position. It can be seen in Fig. 13b, which is an end view of the embodiment of Fig. 13a, that the center of gravity of the assembly lies to the right of vertical plane 111 passing through the axis of rotation of the assembly.

Fig. 14 shows an array of shutter element assemblies in a suspension system at initial temperature T1. The array includes suspension mounts 141 and 142 which provide a separate V-notch for each end piece 144a, 144b, 144c, 144d, 144e, and 144f on the side of mount 141 and for each end piece 145a, 145b, 145c, 145d, 145e, and 145f on the side of mount 142. Thus the shutter elements 143a, 143b, 143c, 143d, 143e, and 143f are approximately parallel to one another and approximately coplanar and can be configured to move in the same manner as temperature changes. At temperature T1, the end pieces are resting on the left side of the V-notches as a result of the shape, curved in the first direction, assumed by the effectors, and the shutter elements are in an open position.

Fig. 15 shows the array of shutter element assemblies of Fig. 14 at an intermediate temperature slightly above the transition temperature T2 at which the actuators previously assumed a straight shape, so that now a resulting torque has moved the assembly to a center position.

Fig. 16 shows the array of shutter element assemblies of Fig. 14 at elevated temperature T3, so that the end pieces of the effectors are resting on the right side of the V-notches as a result of the shape, curved in the second direction, assumed by the effectors, and the shutter elements are in a closed position.

Fig. 17 shows an array of shutter element assemblies, similar to the array of Fig. 14, wherein the operating characteristics of actuators in the array have been adjusted so that, at a given temperature, a first group of actuators causes their corresponding shutter elements 143e and 143f to be in the open position; a second group of actuators causes their corresponding shutter element 143d to be in an intermediate position, and a third group of actuators causes their corresponding shutter elements 143a, 143b, and 143c to be in the closed position.

Figs. 18a - 18d illustrate an array of shutter element assemblies, in which each shutter element assembly is implemented as a single actuator, and wherein the assemblies can be coupled together by an interconnect member illustrated in Fig. 18b. In this embodiment, the array of shutter element assemblies is illustrated as simply an array of actuators 183a, 183b, 183c, 183d, 183e, and 183f that are each similar to the actuator, in Fig. 4. As in prior figures, one set of the ends of each actuator, here represented as 184a, 184b, 184c, 184d, 184e, and 184f, are configured to rest in corresponding V-notches in suspension mount 181, and the opposite set of the ends of each actuator, here represented as 185a, 185b, 185c, 185d, 185e, and 185f, are configured to rest in corresponding V-notches in suspension mount 182. In an alternative embodiment, each shutter element assembly is implemented with an assembly such as illustrated in Figs. 9 and 10. In Fig. 18a, each actuator 183a, 183b, 183c, 183d, 183e, and 183f includes a slot 186a, 186b, 186c, 186d, 186e, and 186f respectively, at the bottom of which is an upward facing knife edge. A rigid, single-piece notched interconnect shown in Fig. 18b is used to couple the assemblies together. Each of the notches 1871 a, 1871 b, 1871 c, 1871 d, 1871 e, and 1871f goes into the corresponding slot 186a, 186b, 186c, 186d, 186e, and 186f respectively, with each notch engaging the upward facing knife edge of its corresponding slot, so that the interconnect forces the shutters, here the actuators, to move in unison. It should be noted that if shutter assemblies such as illustrated in Figs. 9 and 10 are employed instead of the simple actuators of Fig. 4, an interconnect similar to that of Fig. 18b can still be employed, and slots (with upward facing knife edges at the bottom of each slot) can be formed in a set of actuators on one side of the array to receive the interconnect. and can be oriented so that each notch in the interconnect 18b coincides with the upward facing knife edge in the corresponding slot in an actuator of the array. Fig. 18c, the actuators are flexed to the right, so that the center of gravity has been shifted to the right, tending to cause the actuators to rotate toward the other side of the V-notches in the suspension mounts 181 (and 182. The arrows in Fig. 18b depict forces which would act to decrease or increase the transition temperature T2 previously discussed. It should be noted that the down-facing edges in one set of the ends of each actuator, here represented, for example, as 184a, 184b, 184c, 184d, 184e, and 184f, can be configured so as to compensate for the extra weight of the interconnect and to keep the assembly balanced at the transition temperature. T2. When the temperature has shifted sufficiently, then the actuators simultaneously rotate to the high temperature position as the interconnect moves to the right.

Accordingly, depending on the direction of rotation of the actuator (which serves here as a shutter), the interconnect will move in a first direction (to the left) or in a second direction (to the right). The interconnect member travels in first and second directions transverse to the axes of rotation of the assemblies, and the directions depend on the direction of rotation of shutters in the array with change in temperature. In a further related embodiment, the array is configured so as to have for each actuator serving as a shutter first and second rotation limit stops with separately adjustable angular positions, about the longitudinal axis, relative to the vertical plane. The embodiment is implemented by providing adjustable first and second translation limit stops on travel of the interconnect in the first and second directions. Because travel of the interconnect is restricted by the translation limit stops, so also is rotation of the effectors (shutters) similarly restricted.

Figs. 19a - 19c illustrate a shutter element assembly wherein the shutter element is a rectangular parallelepiped. Fig. 19a is an exploded perspective view; Fig. 19b is an assembled perspective view; and Fig. 19c is an end view, showing the center of gravity of the assembly with a"+" or an "X" symbol. In these figures, the structure of the shutter element is generally similar to that shown in Fig. 9, except that the rectangular parallelepiped 191 replaces the shutter 93 of Fig. 9. The parallelepiped is mounted on hubs 92a and 92b, which in turn are coupled to effectors 91 a and 91 b respectively. Because the parallelepiped and the hubs 92a and 92b exhibit symmetry of sorts with respect to the rotational axis AA,it may be feasible to omit the counterweights 94a and 94b of Fig. 9, because as indicated in Fig. 19c, the center of gravity may lie on the axis of rotation of the assembly. Figs. 20a and 20b show an array of shutter element assemblies according to Figs. 19a - 19c. The choice of a parallelepiped for the shutter is propitious, because the V-notches in the suspension mounts 181 and 182 of Fig. 18a can be configured to structure the rotation of the shutter through 90 degrees when there is a sufficient change in temperature between T1 and T3" which will cause a change in which face of the parallelepiped shows to a viewer of the array. Thus, in Fig. 20a, the exposed faces of the parallelepipeds of the array are used to spell "COLD" or other suitable message when the array temperature is at or below T1. Similarly, in Fig. 20b, the exposed faces of the parallelepipeds of the array are used to spell "HOT" or other suitable message when the array temperature is at or above T3. In a related embodiment of the present invention, the underside of the array may also be used for display purposes, and in such a case a separate temperature-dependent message may be place on the remaining two faces of the parallelepipeds.

The embodiments of the invention described above are intended to be merely exemplary; numerous variations and modifications will be apparent to those skilled in the art. All such variations and modifications are intended to be within the scope of the present invention as defined in any appended claims.

## Claims

1. A temperature-driven mechanical system comprising:
a first effector, made of temperature-induced shape-changing material, having first and second ends and a longitudinal axis running through at least one of the ends;
a suspension system that mounts an assembly including the effector, to support rotation of the assembly about the longitudinal axis; the system being **characterized in that**
the suspension system has first and second rotation limit stops to limit rotation of the assembly to less than 180 degrees about the longitudinal axis, wherein the first limit stop is associated with a first angular position of the assembly at or below a first temperature limit and the second limit stop is associated with a second angular position of the assembly at or above a second temperature limit;
wherein the suspension is configured so that at the first temperature limit the first effector assumes a first shape that causes the center of gravity of the assembly to be located on a first side of a vertical plane passing through the longitudinal axis and at the second temperature limit the first effector assumes a second shape that causes the center of gravity of the assembly to be located on a second side of the vertical plane.

2. A system according to claim 1, wherein (i) the assembly includes a second effector having first and second ends and the longitudinal axis also runs through at least one of the first and second ends of the second effector and (ii) the second effector is disposed in the assembly so that the effectors in the assembly exhibit bilateral symmetry.

3. A system according to claim 1, further comprising a shutter element mounted in the assembly, and optionally further comprising a counterweight mounted in the assembly configured to cause the assembly to have a center of gravity located in the vertical plane passing through the longitudinal axis at a transition temperature between the first temperature limit and the second temperature limit.

4. A system according to claim 2, further comprising a shutter element mounted in the assembly, and preferably the shutter element is implemented as rectangular parallelepiped having a major axis that is parallel to the axis of rotation, and two adjacent faces of the parallelepiped display distinct messages, so that temperature of the effectors determines which of the distinct messages is visible to a viewer.

5. An array of systems according to claim 3, the array configured so that the longitudinal axes of the systems in the array are substantially parallel to one another, and preferably the longitudinal axes of the systems are substantially co-planar.

6. An array of systems according to claim 5, wherein a plurality of assemblies are coupled to one another, so that they rotate in unison.

7. An array of systems according to claim 6, further comprising a temperature limit adjustment mechanism configured to provide a torque to the assemblies with respect to their axes of rotation so as to shift the temperature limits at which centers of gravity of the assemblies in the array generate torque sufficient to cause rotation of the assemblies.

8. An array of systems according to claim 7, wherein the temperature limit adjustment mechanism includes a spring with an adjustable amount of force; or the temperature limit adjustment mechanism includes a weight with an adjustable lever arm.

9. An array of systems according to claim 7, further comprising a manual override assembly configured to cause the shutters to move into and be retained in a state determined by manual operation.

10. An array of systems according to claim 6, wherein each of the shutter elements is implemented as rectangular parallelepiped having a major axis that is parallel to the axis of rotation, and two adjacent faces of the parallelepiped display distinct messages, so that temperature of the effectors determines which of the distinct messages is visible to a viewer.

11. A system according to claim 3, wherein the shutter is reflective; or wherein the shutter is light-filtering in that it is configured to selectively pass primarily light falling within a selected frequency range.

12. A system according to claim 3, wherein the shutter is configured to regulate air flow.

13. A system according to claim 1, wherein the first and second rotation limit stops have separately adjustable angular positions, about the longitudinal axis, relative to the vertical plane.

14. An array of systems according to claim 6, wherein the first and second rotation limit stops have separately adjustable angular positions, about the longitudinal axis, relative to the vertical plane.

15. An array of systems according to claim 14, wherein the plurality of assemblies are coupled to one another via an interconnect member that is coupled to each shutter of the array and that travels in first and second directions transverse to the axes of rotation of the assemblies, the directions depending on the direction of rotation of shutters in the array with change in temperature, the array further comprising adjustable first and second translation limit stops on travel of the interconnect in the first and second directions.

## Patentansprüche

1. Temperaturbetriebenes mechanisches System, beinhaltend:
einen ersten Effektor, gefertigt aus einem temperaturinduzieten formverändernden Material, der ein erstes und zweites Ende und eine Längsachse aufweist, die durch mindestens eines der Enden läuft;
ein Aufhängungssystem, das eine Einheit, einschließlich dem Effektor, befestigt, um die Rotation der Einheit um die Längsachse zu unterstützen;
wobei das System **dadurch gekennzeichnet ist, dass** das Aufhängungssystem einen ersten und zweiten Rotationsbegrenzungsanschlag aufweist, um die Rotation der Einheit um die Längsachse auf weniger als 180 Grad zu begrenzen,
wobei der erste Begrenzungsanschlag mit einer ersten Winkelposition der Einheit bei oder unter einer ersten Temperaturbegrenzung verbunden ist und der zweite Begrenzungsanschlag mit einer zweiten Winkelposition der Einheit bei oder über einer zweiten Temperaturbegrenzung verbunden ist;
wobei die Aufhängung so konfiguriert ist, dass bei der ersten Temperaturbegrenzung der erste Effektor eine erste Form annimmt, die bewirkt, dass der Schwerpunkt der Einheit auf einer ersten Seite einer vertikalen Ebene liegt, die durch die Längsachse geht, und bei der zweiten Temperaturbegrenzung der erste Effektor eine zweite Form annimmt, die bewirkt, dass der Schwerpunkt der Einheit auf einer zweiten Seite der vertikalen Ebene liegt.

2. System gemäß Anspruch 1, wobei (i) die Einheit einen zweiten Effektor umfasst, der ein erstes und zweites Ende aufweist, und die Längsachse ebenfalls durch mindestens eines des ersten und zweiten Endes des zweiten Effektors läuft und (ii) der zweite Effektor in der Einheit so angeordnet ist, dass die Effektoren in der Einheit bilaterale Symmetrie aufweisen.

3. System gemäß Anspruch 1, das ferner ein Verschlusselement beinhaltet, das in der Einheit befestigt ist, und optional ferner ein Gegengewicht beinhaltet, das in der Einheit befestigt ist, welche konfiguriert sind, zu bewirken, dass die Einheit bei einer Übergangstemperatur zwischen der ersten Temperaturbegrenzung und der zweiten Temperaturbegrenzung einen Schwerpunkt aufweist, der in der vertikalen Ebene liegt, die durch Längsachse geht.

4. System gemäß Anspruch 2, das ferner ein Verschlusselement beinhaltet, das in der Einheit befestigt ist, und wobei das Verschlusselement bevorzugt als rechteckiger Spat implementiert ist, mit einer Hauptachse, die parallel zur Rotationsachse ist, und wobei zwei nebeneinanderliegende Flächen des Spats eindeutige Meldungen anzeigen, sodass die Temperatur der Effektoren bestimmt, welche der eindeutigen Meldungen in einem Viewer sichtbar ist.

5. Anordnung von Systemen gemäß Anspruch 3, wobei die Anordnung so konfiguriert ist, dass die Längsachsen der Systeme in der Anordnung im Wesentlichen parallel zueinander sind und bevorzugt die Längsachsen der Systeme im Wesentlichen koplanar sind.

6. Anordnung von Systemen gemäß Anspruch 5, wobei eine Vielzahl von Einheiten miteinander gekoppelt sind, sodass sie gemeinsam rotieren.

7. Anordnung von Systemen gemäß Anspruch 6, die ferner einen Temperaturbegrenzungsverstellungsmechanismus beinhaltet, der konfiguriert ist, den Einheiten mit Bezug auf ihre Rotationsachse ein Drehmoment bereitzustellen, um so die Temperaturbegrenzungen zu verschieben, bei denen die Schwerpunkte der Einheiten ein Drehmoment erzeugen, das ausreicht, um die Drehung der Einheiten zu bewirken.

8. Anordnung von Systemen gemäß Anspruch 7, wobei der Temperaturbegrenzungsverstellungsmechanismus eine Feder mit einem verstellbaren Kraftbetrag umfasst; oder der Temperaturbegrenzungsverstellungsmechanismus ein Gewicht mit einem verstellbaren Hebelarm umfasst.

9. Anordnung von Systemen gemäß Anspruch 7, die ferner eine manuelle Übersteuerungseinheit beinhaltet, die konfiguriert ist, zu bewirken, dass sich die Verschlüsse in einen Zustand bewegen und in diesem gehalten werden, der durch manuelle Betätigung bestimmt wird.

10. Anordnung von Systemen gemäß Anspruch 6, wobei jedes der Verschlusselemente als rechteckiger Spat implementiert ist, mit einer Hauptachse, die parallel zur Rotationsachse ist, und wobei zwei nebeneinanderliegende Flächen des Spats eindeutige Meldungen anzeigen, sodass die Temperatur der Effektoren bestimmt, welche der eindeutigen Meldungen in einem Viewer sichtbar ist.

11. System gemäß Anspruch 3, wobei der Verschluss reflektiv ist; oder wobei der Verschluss lichtfilternd ist, wobei er konfiguriert ist, selektiv vorwiegend Licht durchzulassen, das innerhalb eines ausgewählten Frequenzbereichs einfällt.

12. System gemäß Anspruch 3, wobei der Verschluss konfiguriert ist, Luftströmung zu regulieren.

13. System gemäß Anspruch 1, wobei der erste und zweite Rotationsbegrenzungsanschlag separat verstellbare Winkelpositionen, um die Längsachsen, relativ zur vertikalen Ebene aufweisen.

14. Anordnung von Systemen gemäß Anspruch 6, wobei der erste und zweite Rotationsbegrenzungsanschlag separat verstellbare Winkelpositionen, um die Längsachsen, relativ zur vertikalen Ebene aufweisen.

15. Anordnung von Systemen gemäß Anspruch 14, wobei die Vielzahl von Einheiten über ein Verbindungselement miteinander gekoppelt sind, das mit jedem Verschluss der Anordnung gekoppelt ist und in einer ersten und zweiten Richtung quer zur Rotationsachse der Einheiten fährt, wobei die Richtungen von der Rotationsrichtung der Verschlüsse in der Anordnung mit der Änderung der Temperatur abhängen, wobei die Anordnung ferner einen ersten und zweiten Translationsbegrenzungsanschlag der Fahrt der Verbindung in der ersten und zweiten Richtung beinhaltet.

## Revendications

1. Système mécanique réglé par température comprenant :
un premier effecteur, constitué d'un matériau changeant de forme sous l'action de la température, ayant des première et seconde extrémités et un axe longitudinal traversant au moins l'une des extrémités ;
un système de suspension qui se monte dans un ensemble comprenant l'effecteur, afin d'aider la rotation de l'ensemble autour de l'axe longitudinal ; le système étant **caractérisé en ce que**
le système de suspension présente des première et seconde butées de limitation de rotation pour limiter la rotation de l'ensemble à moins de 180 degrés autour de l'axe longitudinal, dans lequel la première butée de limitation est associée à une première position angulaire de l'ensemble à ou en-dessous d'une première limite de température et la seconde butée de limitation est associée à une seconde position angulaire de l'ensemble à ou au-dessus d'une seconde limite de température ;
dans lequel la suspension est configurée de sorte à ce que, à la première limite de température, le premier effecteur assume une première forme qui cause le positionnement du centre de gravité de l'ensemble sur un premier côté d'un plan vertical passant à travers l'axe longitudinal et à la seconde limite de température, le premier effecteur assume une seconde forme qui cause le positionnement du centre de gravité de l'ensemble sur un second côté du plan vertical.

2. Système selon la revendication 1, dans lequel (i) l'ensemble présente un second effecteur ayant des première et seconde extrémités et l'axe longitudinal traverse également au moins l'une des première et seconde extrémités du second effecteur et (ii) le second effecteur est disposé dans l'ensemble de sorte à ce que les effecteurs dans l'ensemble présentent une symétrie bilatérale.

3. Système selon la revendication 1, comprenant en outre un élément de volet qui se monte dans l'ensemble, et qui comprend éventuellement un contrepoids monté dans l'ensemble configuré pour faire en sorte que l'ensemble ait un centre de gravité positionné dans le plan vertical traversant l'axe longitudinal à une température de transition comprise entre la première limite de température et la seconde limite de température.

4. Système selon la revendication 2, comprenant en outre un élément de volet qui se monte dans l'ensemble, et préférablement l'élément de volet est mis en oeuvre sous forme de parallélépipède rectangulaire ayant un axe principal qui est parallèle à l'axe de rotation, et deux face adjacentes du parallélépipède affichent des messages distincts, de sorte à ce que la température des effecteurs détermine lequel des messages distincts est visible à un visualisateur.

5. Architecture de systèmes selon la revendication 3, ladite architecture étant configurée de sorte à ce que les axes longitudinaux des systèmes dans l'architecture soient sensiblement parallèles les uns aux autres et que préférablement les axes longitudinaux des systèmes soient sensiblement coplanaires.

6. Architecture de systèmes selon la revendication 5, dans lequel une pluralité des ensembles est couplée l'une à l'autre de sorte à ce qu'ils tournent à l'unisson.

7. Architecture de systèmes selon la revendication 6, comprenant en outre un mécanisme de réglage de la limite de température configuré pour fournir un couple aux ensembles par rapport à leurs axes de rotation de manière à décaler les limites de température auxquelles les centres de gravité des ensembles dans l'architecture génèrent un couple suffisant pour causer la rotation des ensembles.

8. Architecture de systèmes selon la revendication 7, dans laquelle le mécanisme de réglage de la limite de température comporte un ressort d'une quantité de force ajustable ; ou le mécanisme de réglage de la limite de température comporte un poids avec un bras de levier ajustable.

9. Architecture de systèmes selon la revendication 7, comprenant en outre une commande de surpassement manuel configurée pour causer le déplacement et le maintien des volets dans un état déterminé par intervention manuelle.

10. Architecture de systèmes selon la revendication 6, dans laquelle chacun des éléments de volets est mis en oeuvre sous forme de parallépipède rectangulaire ayant un axe principal qui est parallèle à l'axe de rotation, et deux faces adjacentes du parallépipède affichent des messages distincts, de sorte à ce que la température des effecteurs détermine lequel des messages distincts est visible au visualisateur.

11. Système selon la revendication 3, dans lequel le volet est réfléchissant ; ou dans lequel le volet est apte à filtrer la lumière en ce qu'il est configuré pour faire passer sélectivement en particulier la lumière se situant dans une plage de fréquence sélectionnée.

12. Système selon la revendication 3, dans lequel le volet est configuré pour réguler l'écoulement d'air.

13. Système selon la revendication 1, dans lequel les première et seconde butées de limitation de rotation ont des positions angulaires réglables séparément, autour de l'axe longitudinal, par rapport au plan vertical.

14. Architecture de systèmes selon la revendication 6, dans laquelle les première et seconde butées de limitation de rotation ont des positions angulaires réglables séparément, autour de l'axe longitudinal, par rapport au plan vertical.

15. Architecture de systèmes selon la revendication 14, dans laquelle la pluralité des ensembles est solidarisée à une autre par l'intermédiaire d'un organe d'interconnexion qui est relié à chaque volet de l'architecture et qui se déplace dans des première et seconde directions transversales aux axes de rotation des ensembles, les directions étant fonction du sens de rotation des volets dans l'architecture avec le changement de température, l'architecture comprenant en outre des première et seconde butées de limitation de course lors du déplacement de l'organe d'interconnexion dans les première et seconde directions.
